Europäisches Patentamt

European Patent Office

Office européen des brevets

(19)

(11) Veröffentlichungsnummer: **0 266 656**
B1

# (12) EUROPÄISCHE PATENTSCHRIFT

(45) Veröffentlichungstag der Patentschrift:
11.04.90

(51) Int. Cl.⁴: **B60K 13/04, F01N 7/18**

(21) Anmeldenummer: 87115731.9

(22) Anmeldetag: 27.10.87

(54) **Automatisch montierbare Aufhängevorrichtung.**

(30) Priorität: 03.11.86 DE 3637305

(43) Veröffentlichungstag der Anmeldung:
11.05.88 Patentblatt 88/19

(45) Bekanntmachung des Hinweises auf die Patenterteilung:
11.04.90 Patentblatt 90/15

(84) Benannte Vertragsstaaten:
DE ES FR GB IT

(56) Entgegenhaltungen:
DE-A- 1 505 498
DE-A- 1 555 606
DE-A- 2 622 432
DE-A- 2 834 190
DE-A- 3 346 609
US-A- 2 308 969
US-A- 2 981 351
US-A- 4 550 795

(73) Patentinhaber: VOLKSWAGEN AKTIENGESELLSCHAFT,
D-3180 Wolfsburg(DE)

(72) Erfinder: Hoheisel, Gerhard, Ahornweg 26,
D-3180 Wolfsburg 11(DE)

## Beschreibung

Die Erfindung betrifft eine automatisch montierbare Aufhängevorrichtung zur schwingungsisolierenden Befestigung von Teilen einer Abgasanlage eines Kraftfahrzeuges am Fahrzeugaufbau der im Oberbegriff des Patentanspruchs 1 genannten Art.

Eine Aufhängevorrichtung dieser Art beispielsweise aus der DE-C 34 45 491 bekannt.

Diese bekannte Aufhängevorrichtung besitzt im wesentlichen den Vorzug, daß sie im Vergleich zu üblicherweise eingesetzten Anordnungen mit ring- oder schlaufenförmigen gummielastischen Federelementen, in die einerseits ein an der Abgasanlage angeschweißter Einhängebügel und andererseits ein am Fahrzeugaufbau befestigter Haltebügel eingreifen, relativ einfach, insbesondere auch automatisch montierbar ist.

Die bekannte Aufhängevorrichtung enthält ein metallisches Halteteil in Form eines im wesentlichen U-förmigen Bügels und ein vom Bügel umschlossenes Federelement aus Elastomer-Werkstoff. Die Schenkel des U-förmigen Bügels besitzen nach außen abgewinkelte Flansche, mit denen er am Fahrzeugaufbau anschraubbar ist. Beim Anschrauben des Bügels wird das von ihm umschlossene Federelement, welches im nichteingebauten Zustand etwas gegenüber der Anlagefläche des Metallbügels übersteht, unter Vorspannung in den Metallbügel eingepreßt bzw. von diesem aufgenommen.

Der Erfindung liegt nun die Aufgabe zugrunde, eine automatisch montierbare Aufhängevorrichtung der im Oberbegriff des Patentanspruchs 1 genannten Art zu schaffen, die nicht nur hervorragende schwingungsisolierende Eigenschaften besitzt, sondern auch an die Bauteiltoleranzen der aneinander zu befestigenden Teile und insbesondere der im allgemeinen aus mehreren Einzelteilen zusammengefügten Abgasanlage nur geringe Anforderungen stellt.

Diese Aufgabe wird erfindungsgemäß durch die kennzeichnenden Merkmale des Patentanspruchs 1 gelöst.

Vorteilhafte Ausgestaltungen und Weiterbildungen der Erfindung sind in den Unteransprüchen angegeben.

Die erfindungsgemäße Aufhängevorrichtung gewährleistet einerseits mit großer Sicherheit für alle denkbaren Schwingungsrichtungen der aufgehängten Abgasanlage auch beim Zusammentreffen der ungünstigsten Bauteiltoleranzen eine gewünscht weiche Aufhängung und andererseits ermöglicht sie in einfacher Weise eine automatische Montage.

Im Gegensatz dazu kann mit der bekannten Aufhängevorrichtung nur dann eine vergleichsweise weiche Aufhängung der Abgasanlage realisiert werden, wenn sowohl bezüglich der Quer-, der Hochals auch bezüglich der Längsrichtung der Aufhängevorrichtung enge Bauteiltoleranzen eingehalten werden. Nur dann käme es nicht zu Verzwängungen des vom Fahrzeugboden und dem bügelförmigen Halteteil allseits umschlossenen Federelements. Solche Verzwängungen führen jedoch zur Verhärtung des Federelements und damit zu einer Beeinträchtigung seiner schwingungsisolierenden Wirkung.

Solche engen Toleranzen liegen bei Abgasanlagen von Kraftfahrzeugen jedoch nur sehr selten vor, da diese unter Umständen bis zu 4 m langen Anlagen im allgemeinen aus mehreren Teilen zusammengesetzt sind, z. B. aus einem Vorrohr, einem Vorschalldämpfer (bzw. Katalysator), einem Mittelschalldämpfer und einem Nachschalldämpfer besteht.

Spätestens beim letzten Glied dieser zusammengesteckten Anlage liegen dann im allgemeinen Verhältnisse vor, bei denen die zulässigen Toleranzen für die bekannte Aufhängevorrichtung überschritten werden und deren schwingungsisolierenden Eigenschaften damit stark beeinträchtigt werden. Zwar wäre es prinzipiell durchaus denkbar, diese Toleranzgrenze durch entsprechende Vergrößerung der Aufhängevorrichtung, insbesondere ihres gummielastischen Feder elementes so weit hinauszuschieben, daß auch bei ungünstigen Toleranzverhältnissen eine noch akzeptable Schwingungsisolierung vorläge, doch würden die Aufhängevorrichtungen dann vergleichsweise teuer und darüber hinaus so groß werden, daß sie in vielen Fällen in dem für ihre Montage zur Verfügung stehenden Bauraum nicht unterzubringen wären.

Anhand zweier in der Zeichnung dargestellter Ausführungsbeispiele wird die Erfindung nachstehend näher erläutert.

In der Zeichnung zeigen

Fig. 1 die zum Teil geschnittene Seitenansicht eines ersten Ausführungsbeispiels der erfindungsgemäßen Aufhängevorrichtung,

Fig. 1a die Draufsicht dieser Aufhängevorrichtung,

Figuren 2 bis 2b die Seitenansicht, die Draufsicht und eine Detailansicht des metallischen Halteteils dieser Aufhängevorrichtung,

Figuren 3 bis 3b die teilgeschnittene Seitenansicht, die Draufsicht des Federelements dieser Aufhängevorrichtung, und einen Schnitt durch den Fußteil dieses Federelements entsprechend der Schnittführung III in Fig. 3 und

Fig. 4 die teilgeschnittene Seitenansicht eines weiteren Ausführungsbeispiels der erfindungsgemäßen Aufhängevorrichtung.

Die automatisch montierbare Aufhängevorrichtung zur schwingungsisolierenden Befestigung von Teilen einer nicht weiter dargestellten Abgasanlage am ebenfalls nicht weiter dargestellten Fahrzeugaufbau eines Kraftfahrzeuges besteht aus einem am Fahrzeugaufbau anschraubbaren metallischen Halteteil 1 und einem mit diesem verbundenen Federelement 2 aus einem Elastomer-Werkstoff, z.B. aus Gummi.

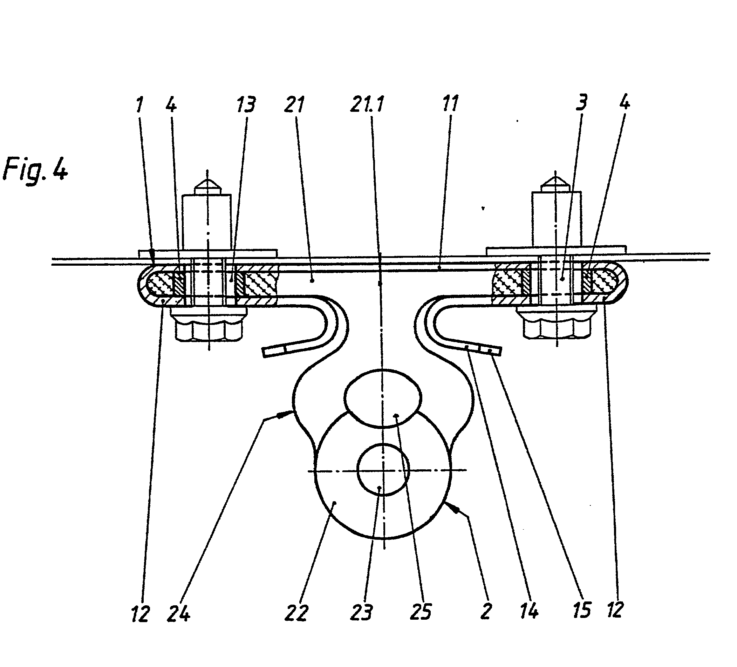

Das metallische Halteteil 1 weist eine zumindest annähernd ebene Grundplatte 11 auf, die dem Fahrzeugaufbau zugekehrt und an diesem anschraubbar ist. An einander gegenüberliegenden Seiten trägt die Grundplatte 1 zur Plattenmitte hin gebogene Schenkelteile 12, die im Abstand zur Grundplatte verlaufen. In der Grundplatte 11 und in den beiden Schenkelteilen 12 sind Aufnahmelöcher 13 für Befestigungsschrauben 3 vorgesehen, die jedoch lediglich in Fig. 4 eingezeichnet sind.

Das Federelement 2 aus Elastomer-Werkstoff besteht aus einem an der Grundplatte 11 des metallischen Halteteils 1 befestigten Fußteil 21, einem in den Ausführungsbeispielen etwa ringförmigen Kopfteil 22 zur Befestigung des Haltebügels der nicht weiter dargestellten Abgasanlage und einem das Kopfteil mit dem Fußteil verbindenden Zwischenteil 24, welches im wesentlichen auf Zug beansprucht wird.

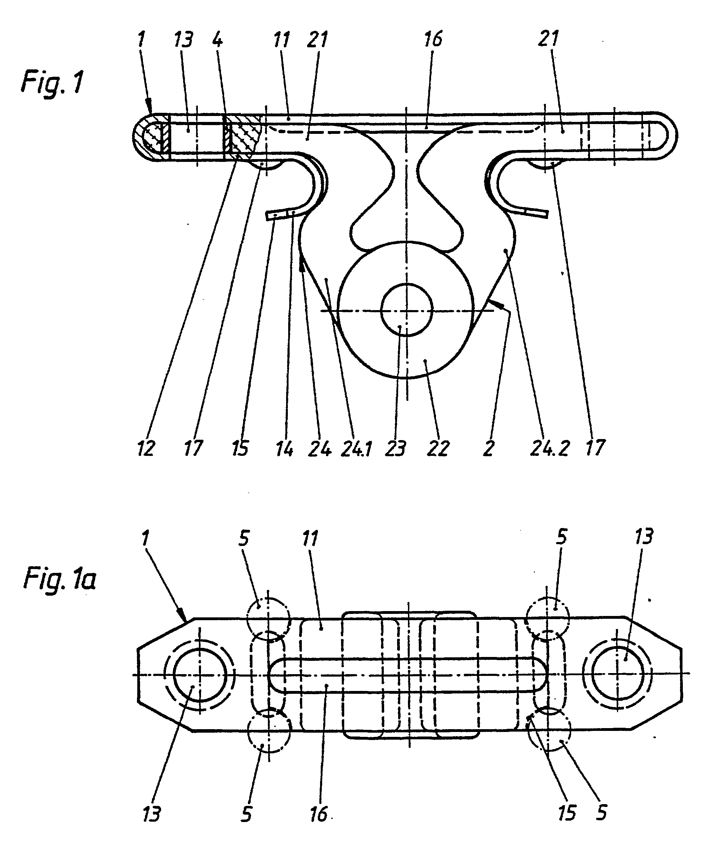

Im Ausführungsbeispiel gemäß Fig. 1 ist das Federelement 2 mit einem zweiteiligen Fußteil 21 ausgestattet, welches jeweils zwischen die Grundplatte 11 und deren Schenkelteil 12 greift und mit diesem verspannt ist. Das Kopfteil 22 und das zweiteilige Fußteil 21 ist hierbei durch ein zweiteiliges Zwischenteil 24 verbunden, dessen beiden Teile 24.1 bzw. 24.2 im dargestellten unbelasteten Zustand eine etwa S- oder Z-förmige Gestalt besitzen.

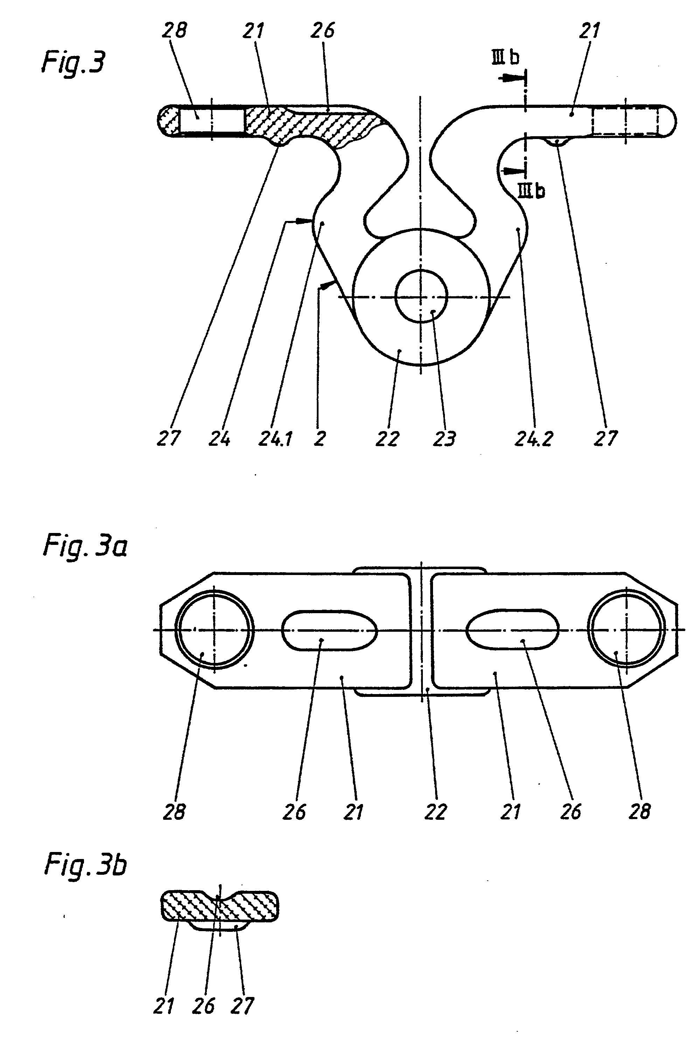

Um das Federelement 2 und das metallische Halteteil 1 gegenseitig zu fixieren, ist im Fußteil bzw. in den beiden Teilfußteilen 21 des Federelementes eine etwa rinnenförmige Längsnut 26 vorgesehen. Diese Längsnut ist in den das Federelement 2 im Detail darstellenden Figuren 3 und 3b gut zu erkennen.

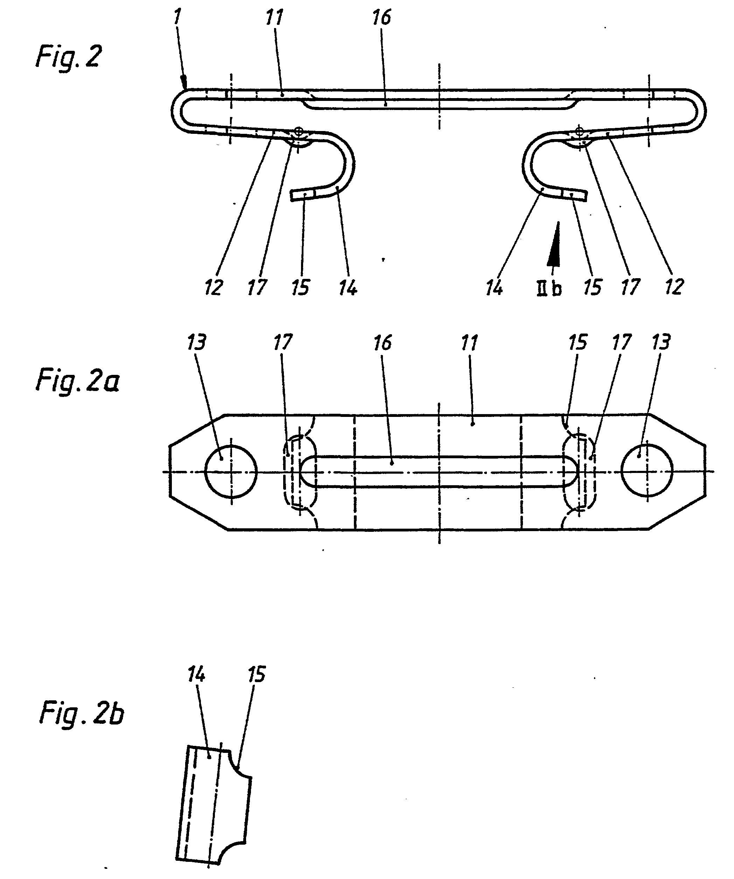

In entsprechender Weise ist in der Grundplatte 11 des metallischen Halteteils, und zwar im Bereich zwischen den beiden Aufnahmelöchern 13, eine Längssicke 16 angeordnet, die zum Fußteil 21 hin durchgedrückt ist und in die Längsnut 26 des bzw. der Fußteile 21 eingreift. In den Figuren 2 und 2a, die das metallische Halteteil im Detail zeigen, ist diese Längssicke gut zu erkennen.

Wie die Figuren 1 bis 2a erkennen lassen, sind im metallischen Halteteil 1 neben der Längssicke 16 noch zwei Quersicken 17 angeordnet, und zwar in den beiden Schenkelteilen 12 im Bereich zwischen den beiden Aufnahmelöchern 13. Diese Quersicken 17 sind nicht wie die Längssicke 16 zum Fußteil 21 hin durchgedrückt, sondern vom Fußteil weg nach außen. Im ein- oder zweiteiligen Fußteil 21 sind in entsprechender Weise in die Quersicken 17 eingreifende Querwülste 27 angeordnet.

Durch die Quersicken 17 und die Querwülste 27 wird eine totale oder annähernd totale Zugentlastung im durch die Durchgangslöcher 28 für die Befestigungsschrauben 3 querschnittsreduzierten Bereich des Fußteils 21 des Federelementes erzielt. Durch diese einfache Maßnahme ist es möglich, in die Durchgangslöcher 28 einfach Distanzbuchsen 4 lose einzulegen, durch welche Grundplatte 11 und Schenkelteile 12 der Halteplatte 1 beim Anschrauben der Aufhängevorrichtung am Fahrzeugaufbau auf ein definiertes Maß zusammengedrückt werden, bei dem auch die zwiscen ihnen liegende Bereiche des Fußteils 21 ausreichend und sicher festgespannt sind. Ohne die vorerwähnte Zugentlastung müßten solche Distanzbuchsen zwingend in die Durchgangslöcher 28 einvulkanisiert werden, was fertigungstechnisch aufwendig und teuer ist.

In dem in Fig. 4 dargestellten Ausführungsbeispiel ist das Fußteil des Federelementes 2 einteilig und zwar als auf der Grundplatte 11 des Halteteils etwa vollflächig aufliegendes Plattenteil 21.1 ausgebildet. Auch bei dieser Anordnung ist es von Vorteil, die vorerwähnten Längs- und Quersicken im Halteteil bzw. die vorerwähnten Querwülste bzw. Längsnut im Fußteil des Federelementes vorzusehen. Das einteilige Fußteil 21.1 ist mit dem Kopfteil 22 durch ein etwa mittig am Fußteil angreifendes Zwischenteil 24 verbunden. Um die gewünschten elastischen Eigenschaften zu erzielen, ist in diesem Zwischenteil mindestens eine etwa nierenförmige o. ä. Durchbrechung 25 vorgesehen, die etwa parallel zu der für den Eingriff des metallischen Haltebügels der Abgasanlage dienenden Ausnehmung 23 angeordnet ist. Es versteht sich, daß erforderlichenfalls auch weitere oder anders gestaltete Durchbrechungen im Zwischenteil 24 vorgesehen werden können.

Die freien Enden der Schenkelteile 12 der Grundplatte des metallischen Halteteils sind mit einem Übergangsradius nach außen abgewinkelt. Durch diese abgerundeten Abwinkelungen 14 wird die seitliche Auslenkung des elastomeren Federelementes 2 in definierten Grenzen gehalten. Die beiden Schenkelteile sind dabei nur so weit nach außen abgewinkelt, daß die in den Schenkelteilen angeordneten Aufnahmelöcher 13 sowie darin eingeführte Befestigungsschrauben 3 von unten für einen Schrauber frei zugänglich bleiben, was für eine automatisierte Montage von Vorteil ist.

Bei einer automatisierten Montage der Abgasanlage wird die aus den Schalldämpfern, den Rohren und ggf. dem Katalysator zusammengesetzte Abgasanlage in einem Montagerahmen o. ä. mit den Aufhängevorrichtungen komplettiert, d. h. die mechanische Verbindung zwischen Aufhängevorrichtung und Abgasanlage wird hergestellt. In der späteren Endmontage wird dann die Anlage als Ganzes mittels eines Hubwagens o. ä. von unten gegen den Fahrzeugboden gefahren und mit diesem automatisch verschraubt. Die Lage der Aufhängevorrichtung muß bei einer automatischen Montage räumlich genau festgelegt sein, wozu z.B. besondere Fixierbolzen o. ä. Verwendung finden können. In den gezeigten Ausführungsbeispielen sind für eine derartige Fixierung der Aufhängevorrichtung an den freien Enden der Abwinklungen 14 viertelkreisförmige Ausnehmungen o. ä. 15 angeordnet, in die z.B. in Fig. 1a nur gestrichelt angedeutete Fixierbolzen 5 eingreifen können.

Die erfindungsgemäße automatisch montierbare Aufhängevorrichtung gewährleistet eine sehr wirkungsvolle Abkopplung der Geräuschquelle Abgasanlage und unabhängig von den jeweils vorliegenden Bautoleranzen eine sehr exakte Fixierung der Abgasanlage unter dem Fahrzeugboden.

## Patentansprüche

1. Automatisch montierbare Aufhängevorrichtung zur schwingungsisolierenden Befestigung von Teilen einer Abgasanlage eines Kraftfahrzeuges am Fahrzeugaufbau, mit einem am Fahrzeugaufbau anschraubbaren metallischen Halteteil und einem mit diesem verbundenen Federelement aus Elastomer-Werkstoff, in dem eine Ausnehmung für den Eingriff eines metallischen Haltebügels des zu befestigenden Teils angeordnet ist, dadurch gekennzeichnet, daß das metallische Halteteil (1) eine dem Fahrzeugaufbau zugekehrte, zumindest annähernd ebene Grundplatte (11) aufweist, welche an einander gegenüberliegenden Seiten zur Plattenmitte hin gebogene und im Abstand zur Grundplatte (11) verlaufende Schenkelteile (12) trägt, wobei durch die Grundplatte (11) und die Schenkelteile (12) hindurchführende Aufnahmelöcher (13) für Befestigungsschrauben (3) vorgesehen sind, und daß das Federelement (2) aus einem zwischen die Grundplatte (11) und deren Schenkelteile (12) greifenden und daran befestigten ein- oder zweiteiligen Fußteil (21), einem die Ausnehmung (23) enthaltenden, vorzugsweise etwa ringförmigen Kopfteil (22) und einem den Fußteil (21) mit dem Kopfteil (22) verbindenden, im wesentlichen auf Zug beanspruchten Zwischenteil (24) besteht.

2. Aufhängevorrichtung nach Anspruch 1, dadurch gekennzeichnet, daß das Kopfteil (22) mit den Teilen des zweiteiligen Fußteils (21) des Federelementes (2) durch je ein - im unbelasteten Zustand - etwa S- oder Z-förmiges Zwischenteil (24.1; 24.2) verbunden ist.

3. Aufhängevorrichtung nach Anspruch 1, dadurch gekennzeichnet, daß das Fußteil des Federelements (2) als auf der Grundplatte (11) des Halteteils (1) etwa vollflächig aufliegendes Plattenteil (21.1) ausgebildet ist, welches mit dem Kopfteil (22) durch ein etwa mittig an ihm angreifendes Zwischenteil (24) verbunden ist, das mindestens eine zur Ausnehmung (23) etwa parallel ausgerichtete nierenförmige o. ä. Durchbrechung (25) aufweist.

4. Aufhängevorrichtung nach einem der Ansprüche 1 bis 3, dadurch gekennzeichnet, daß das Fußteil (21; 21.1) des Federelements (2) mit der Grundplatte (11) und dessen Schenkelteilen (12) verspannt ist.

5. Aufhängevorrichtung nach Anspruch 4, dadurch gekennzeichnet, daß zur gegenseitigen Fixierung von Fußteil (21; 21.1) und Grundplatte (11) im Fußteil eine rinnenförmige Längsnut (26) und in der Grundplatte (11) - im Bereich zwischen den beiden Aufnahmelöchern (13) - eine zum Fußteil hin durchgedrückte und in die Längsnut (26) eingreifende Längssicke (16) angeordnet ist.

6. Aufhängevorrichtung nach Anspruch 4 oder 5, dadurch gekennzeichnet, daß in den Schenkelteilen (12) des Halteteils (1) im Bereich zwischen den beiden Aufnahmelöchern (13) je eine nach außen, vom Fußteil (21; 21.1) weggedrückte Quersicke (17) und im Fußteil (21; 21.1) je eine in diese Quersicke (17) eingreifende Querwulst (27) angeordnet ist.

7. Aufhängevorrichtung nach einem der Ansprüche 1 bis 6, dadurch gekennzeichnet, daß die freien Enden der Schenkelteile (12) der Grundplatte (11) mit einem Übergangsradius nach außen abgewinkelt sind, jedoch nur so weit, daß die in den Schenkelteilen (11) angeordneten Aufnahmelöcher (13) für die Befestigungsschrauben (3) frei zugänglich bleiben.

## Claims

1. An automatically mountable suspension device for securing parts of an exhaust gas system of a motor vehicle to the vehicle body in a vibration-insulating manner, having a metal retaining part boltable to the vehicle body and a spring element of elastomer material which is connected to the retaining part and in which is disposed a cut-away portion for engagement of a metal retaining clip of the part to be secured, characterised in that the metal retaining part (1) has an at least approximately planar base plate (11) which faces the vehicle body and which carries limb portions (12) which are bent toward the centre of the plate at mutually opposite ends and extend at a distance from the base plate (11), reception holes (13), leading through the base plate (11) and the limb portions (12), being provided for fastening bolts (3), and that the spring element (2) comprises a one- or two-piece foot part (21) which engages between the base plate (11) and the limb portions (12) thereof and is secured thereto, a preferably approximately annular head part (22) which includes the cut-away portion (23), and an intermediate part (24) connecting the the foot part (21) to the head part (22) and chiefly subjected to tensile stress.

2. A suspension device as claimed in claim 1, characterised in that the head part (22) is connected to the parts of the two-piece foot part (21) of the spring element (2) by respective intermediate parts (24.1; 24.2) which are approximately S-shaped or Z-shaped when in the non-stressed state.

3. A suspension device as claimed in claim 1, characterised in that the foot part of the spring element (2) is in the form of a plate part (21.1) which rests on the base plate (11) of the retaining part (1) approximately over the entire surface thereof and which is connected to the head part (22) by an intermediate part (24) which acts approximately centrally thereon and which has at least one reniform or the like, opening (25) directed approximately parallel to the cut-away portion (23).

4. A suspension device as claimed in one of the claims 1 to 3, characterised in that the foot part (21; 21.1) of the spring element (2) is clamped by the base plate (11) and the limb portions (12) thereof.

5. A suspension device as claimed in claim 4, characterised in that, for the purpose of mutual fixing of the foot part (21; 21.1) and the base plate (11), a channel-like longitudinal groove (26) is disposed in the foot part and a longitudinal bead (16) is disposed in the base plate (11) in the region between the two reception holes (13) and is pushed through towards the foot part and engages the longitudinal groove (26).

6. A suspension device as claimed in claim 4 or 5, characterised in that a transverse bead (17) pushed outwardly away from the foot part (21; 21.1) is disposed in each of the limb portions (12) of the retaining part (1) in the region between the two reception holes (13), and respective transverse beads (27) engaging the transverse beads (17) are disposed in the foot part (21; 21.1).

7. suspension device as claimed in one of the claims 1 to 6, characterised in that the free ends of the limb portions (12) of the base plate (11) are bent outwardly with a transition radius, but only to an extent that the reception holes (13), disposed in the limb portions (11), for the fastening bolts (3) remain freely accessible.

**Revendications**

1. Dispositif de suspension à montage automatique, destiné à la fixation, à l'abri des oscillations, sur la carrosserie d'un véhicule automobile, de parties d'une installation d'évacuation des gaz d'échappement du véhicule, comportant un élément de maintien métallique à visser sur la carrosserie du véhicule et un élément formant ressort en élastomère, relié au premier, dans lequel un évidement est prévu pour l'engagement d'un étrier de maintien métallique de l'élément à fixer, caractérisé en ce que l'élément de maintien (1) métallique comporte une plaque de base (11) au moins à peu près plane, tournée vers la carrosserie du véhicule, qui porte sur des côtés opposés les uns aux autres, des parties de branche (12) repliées vers le centre de la plaque et espacées de la plaque de base (11), des trous de logement (13) étant pratiqués à travers la plaque de base (11) et les parties de branche (12), pour les vis de fixation (3), et en ce que l'élément formant ressort (2) est constitué d'un élément de pied (21) en une ou deux parties, agissant entre la plaque de base (11) et ses parties de branche (12), et fixé sur celles-ci, d'un élément de tête (22) de préférence à peu près annulaire, contenant l'évidement (23), et d'un élément intermédiaire (24) reliant l'élément de pied (21) et l'élément de tête (22), sollicité pour l'essentiel en traction.

2. Dispositif de suspension selon la revendication 1, caractérisé en ce que l'élément de tête (22) est relié aux parties de l'élément de tête (21) en deux parties de l'élément formant ressort (2), par un élément intermédiaire (24.1; 24.2) en forme de S ou de Z, à l'état non sollicité.

3. Dispositif de suspension selon la revendication 1, caractérisé en ce que l'élément de pied de l'élément formant ressort (2) est sous la forme d'une partie de plaque (21.1) reposant à peu près sur toute sa surface sur la plaque de base (11) de l'élément de maintien (1), laquelle partie de plaque est reliée à l'élément de tête (22) par un élément intermédiaire (24) agissant à peu près en son centre, lequel élément intermédiaire présente un ajour (25) réniforme ou similaire, parallèle à l'évidement (23).

4. Dispositif de suspension selon l'une des revendications 1 à 3, caractérisé en ce que l'élément de pied (21; 21.1) de l'élément formant ressort (2) est serré avec la plaque de base (11) et avec ses parties de branche (12).

5. Dispositif de suspension selon la revendication 4, caractérisé en ce que pour fixer réciproquement l'élément de pied (21; 21.1) et la plaque de base (11), il est prévu dans l'élément de pied une rainure longitudinale (26) en forme de rigole et dans la plaque de base (11) – dans la zone comprise entre les deux trous de logement (13) – une moulure longitudinale (16) pressée vers l'élément de pied et s'engageant dans la rainure longitudinale (26).

6. Dispositif de suspension selon la revendication 4 ou 5, caractérisé en ce qu'une moulure transversale (17) pressée vers l'extérieur, s'éloignant de l'élément de pied (21; 21.1) est prévue dans les parties de branche (12) de l'élément de maintien (1), dans la zone comprise entre les deux trous de logement (13), et en ce qu'un bourrelet transversal (27) s'engageant dans cette moulure transversale (17) est prévu dans l'élément de pied (21; 21.1).

7. Dispositif de suspension selon l'une des revendications 1 à 6, caractérisé en ce que les extrémités libres de parties de branche (12) de la plaque de base (11) sont coudées vers l'extérieur, avec un rayon de transition, mais tout juste assez pour que les trous de logement (13) pratiqués dans les parties de branche (11) restent librement accessibles pour les vis de fixation (3).

EP 0 266 656 B1

Fig. 1

Fig. 1a

Fig. 2

Fig. 2a

Fig. 2b

Fig.3

Fig. 3a

Fig.3b

Fig. 4